# EUROPEAN PATENT SPECIFICATION

(11) **EP 3 604 097 B1**
(45) Date of publication and mention of the grant of the patent: **11.05.2022**
(21) Application number: 18780807.6
(22) Date of filing: 06.04.2018
(51) Int. Cl.: B62J 99/00, B60W 50/08, B62J 45/416, B62K 21/00, B60W 30/045

(54) **STEERING INPUT INFORMATION ACQUISITION DEVICE**
LENKEINGABEINFORMATIONSERFASSUNGSVORRICHTUNG
DISPOSITIF D'ACQUISITION D'INFORMATIONS D'ENTRÉE DE DIRECTION

(30) Priority: 07.04.2017 JP 2017076672
(43) Date of publication of application: 05.02.2020
(73) Proprietor: Yamaha Hatsudoki Kabushiki Kaisha, Iwata-shi, Shizuoka 438-8501 (JP); National Institute of Advanced Industrial Science and Technology, Tokyo 100-8921 (JP)
(72) Inventor: ISHII, Wataru, Iwata-shi Shizuoka 438-8501 (JP); SATOH, Akira, Iwata-shi Shizuoka 438-8501 (JP); OKUHARA, Naoki, Iwata-shi Shizuoka 438-8501 (JP); HARADA, Yoshinori, Iwata-shi Shizuoka 438-8501 (JP); SHII, Noriko, Iwata-shi Shizuoka 438-8501 (JP); TADA, Mitsunori, Tokyo 135-0064 (JP); MIYATA, Natsuki, Tokyo 135-0064 (JP); MURAI, Akihiko, Tokyo 135-0064 (JP)
(74) Representative: Stöckeler, Ferdinand
(86) International application number: PCT/JP2018/014718
(87) International publication number: WO 2018/186488

(56) References cited:
- EP-A2- 1 516 586
- WO-A1-2011/077638
- WO-A1-2012/056558
- JP-A- 2002 230 699
- JP-A- 2006 274 869
- JP-A- 2006 337 055
- JP-A- 2017 043 246
- MOTOKI NAKANO ET AL: "Improving the maneuverability of power assist valves by compensation considering of posture", ADVANCED INTELLIGENT MECHATRONICS (AIM), 2012 IEEE/ASME INTERNATIONAL CONFERENCE ON, IEEE, 11 July 2012 (2012-07-11), pages 1111-1116, XP032222464, DOI: 10.1109/AIM.2012.6265959 ISBN: 978-1-4673-2575-2

## Description

### TECHNICAL FIELD

The present teaching relates to a steering input information acquisition device that acquires information related to a steering input by a rider to a straddled vehicle.

### BACKGROUND ART

A technology of grasping a behavior of a straddled vehicle during travel is desired. For example, Japanese Patent Application Publication No. 2007-62602 discloses a method in which a rider is photographed by a video camera and a behavior of rider is quantitively grasped from a video image of an action of the rider. This prior art method does not include steering input information related to muscle activity of the operator.

### CITATION LIST

### PATENT DOCUMENT

Patent Document 1: Japanese Patent Application Publication No. 2007-62602

### SUMMARY OF INVENTION

### PROBLEMS TO BE SOLVED BY INVENTION

Present inventors tried to grasp a behavior of a straddled vehicle during travel, based on a behavior of a rider obtained from a camera. However, it was not possible to grasp the behavior of the straddled vehicle during travel with high accuracy. A possible reason for this, the behavior of the rider obtained from the camera is not sufficient as a factor affecting the behavior of the straddled vehicle during travel.

It is an object of the present teaching is to provide a device that acquires necessary information related to a steering input of a rider for grasping a behavior of a straddled vehicle during travel.

### SOLUTION TO PROBLEM

The present inventors examined factors affecting the behavior of the straddled vehicle during travel in detail. One of the factors affecting the behavior of the straddled vehicle during travel is an operation input to an operation member by the rider. Examples of the operation member include, for example, an accelerator operation member, a front brake operation member, a rear brake operation member, a handle, a clutch operation member, a shift operation member, or the like. When the rider operates these operation members, a driving force, a breaking force, a travel direction, or the like of the straddled vehicle is changed and the behavior of the straddled vehicle during travel is changed. In addition, in some cases, change in a posture of the rider affects the behavior of the straddled vehicle during travel.

However, through examinations of the above described factors in detail, it was found from hearing of riders that, in some cases, although the posture of a rider hardly changes, a reactive force received by the rider from a vehicle differs and how the rider uses muscles differs. As a result of examining the above described point, the present inventors found that steering of the straddled vehicle by the rider includes motion of the rider.

The motion of the rider includes three elements. The three elements are the posture of the rider, the reactive force received by the rider from the vehicle, and information related to muscle activity of the rider. The present inventors found that a behavior of the straddled vehicle during travel can be grasped with high accuracy by taking these three elements into consideration.

Up until now, it has been considered that it is necessary to use various sensors (for example, for a myoelectric potential) in order to acquire information related to the muscle activity of the rider. Also, it has been considered that the rider uses change in the posture well to control the behavior of the straddled vehicle during travel, and therefore, the degree of freedom of the posture of the rider who is riding on the straddled vehicle is high. Therefore, it has been considered difficult to grasp information related to the muscle activity of the rider affecting steering of the straddled vehicle with high accuracy.

However, the present inventors noticed through their detailed examinations that the posture of the rider actually tends to be determined. Specifically, it was found that, while the rider is riding on the straddled vehicle, hands and feet of the rider contact the straddled vehicle, and therefore, the posture of the rider is constrained. As a result, the degree of freedom of the posture of the rider is reduced, and therefore, the posture of the rider tends to be determined. It was thus found that, using the fact that the posture of the rider tends to be determined as described above, the information related to the muscle activity of the rider, which affects steering of the straddled vehicle, can be grasped with high accuracy. The present inventors completed the present teaching, based on the above described findings.

A steering input information acquisition device according to one embodiment of the present teaching acquires information related to a steering input of a rider to a straddled vehicle. The steering input information acquisition device includes a motion-input-information-acquisition section and an operation-input-information-acquisition section. The motion-input-information-acquisition section acquires information related to a motion input of the rider to the straddled vehicle. The motion input of the rider is an input that causes a vehicle behavior of the straddled vehicle to occur. The information related to the motion input of the rider includes information related to a posture of the rider, information related to a reactive force received by the rider from the straddled vehicle, and information related to muscle activity of the rider. The operation-input-information-acquisition section acquires information related to an operation input of the rider to an operation member of the straddled vehicle. The operation input of the rider to the operation member is the input that causes the vehicle behavior of the straddled vehicle to occur. The steering input information acquisition device acquires information related to the steering input of the rider to the straddled vehicle, based on information acquired from the motion-input-information-acquisition section and information acquired from the operation-input-information-acquisition section.

In the steering input information acquisition device, the information related to the steering input of the rider to the straddled vehicle is acquired by using the information related to the motion input and the operation input of the rider. Therefore, the behavior of the straddled vehicle during travel can be grasped with high accuracy.

Note that the input that causes the vehicle behavior of the straddled vehicle to occur includes the motion input of the rider to the straddled vehicle and the operation input of the rider to the operation member of the straddled vehicle. The vehicle behavior of the straddled vehicle includes, for example, acceleration, deceleration, turning, or the like during travel.

The information related to the operation input of the rider to the operation member of the straddled vehicle is, for example, an operation amount of the operation member. There is no particular limitation on the operation member, as long as the behavior of the straddled vehicle is changed by operation of the operation member by the rider. That is, there is no particular limitation on the operation member, as long as a driving force, a breaking force, a travel direction, or the like of the straddled vehicle is changed and the behavior of the straddled vehicle during travel is changed. In this case, the operation members include, for example, an accelerator operation member, a front brake operation member, a rear brake operation member, a handle, a clutch operation member, a shift operation member, or the like.

The information related to the operation input of the operator to the operation member of the operation subject can be acquired, for example, by using a sensor. There is no particular limitation on the sensor, as long as the sensor can measure the operation amount of the operation member. The sensor is, for example, a position sensor.

The motion-input-information-acquisition section may include a posture-information-acquisition section. The posture-information-acquisition section acquires information related to the posture of the rider.

The information related to the posture of the rider is necessary information for specifying the posture of the rider. Specifically, the information related to the posture of the rider is necessary data (for example, positional information) for specifying positions of head, shoulders, elbows, or the like of the rider. The posture of the rider is specified, for example, by grasping positions of joints of the rider. The posture of the rider includes, for example, a visual line (that is, movement of eyeballs) of the rider.

The information related to the posture of the rider can be acquired, for example, by using a camera or a sensor. There is no particular limitation on a structure of the camera. The camera may be, for example, a monocular camera and may be a stereo camera. In a case where the camera is provided in the straddled vehicle, there is no particular limitation on a position in which the camera is provided in the straddled vehicle, as long as the position is a position in which the information related to the posture of the operator can be acquired. The camera is provided, for example, in a handle or the like of the straddled vehicle. The number of the cameras may be one and may be a plural number. The sensor may be provided in the straddled vehicle and may be provided to the rider. When the sensor is provided to the rider, for example, it is an option to provide the sensor to clothing of the rider. The sensor may be, for example, an inertial sensor. The sensor may be, for example, a cloth-like sensor. The number of the sensors may be one and may be a plural number.

There is no particular limitation on a form in which the posture-information-acquisition section acquires information. For example, the posture-information-acquisition section may be configured to acquire information by measurement and may be configured to estimate necessary information from measured data to acquire the necessary information.

The posture-information-acquisition section may be configured to acquire information related to temporal change in the posture of the rider. In this case, the posture-information-acquisition section acquires information (specifically, information related to the motion input of the rider) related to the steering input of the rider to the straddled vehicle using the information related to the temporal change in the posture of the rider. Therefore, the vehicle behavior of the straddled vehicle during travel can be grasped with higher accuracy.

The motion-input-information-acquisition section may include a reactive-force-information-acquisition section. The reactive-force-information-acquisition section acquires information related to the reactive force received by the rider from the straddled vehicle.

The reactive force received by the rider from the straddled vehicle occurs due to input of a load to the straddled vehicle by the rider. That is, the rider receives the reactive force from the straddled vehicle in a portion in which the rider contacts the straddled vehicle. The portions in which the rider contacts the straddled vehicle are, for example, grips that the rider holds, steps on which the rider puts the feet, a seat on which the rider sits, a fuel tank on which the rider maintains a knee grip posture, or the like.

The information related to the reactive force received by the rider from the straddled vehicle is necessary information for specifying the reactive force received by the rider from the straddled vehicle. Specifically, the information related to the reactive force is necessary data (for example, a load) for specifying a force received by the rider from the position in which the rider contacts the straddled vehicle (or a force applied by the rider to the portion).

The information related to the reactive force received by the rider from the straddled vehicle can be acquired, for example, by a sensor. There is no particular limitation on a structure of the sensor. The sensor is, for example, a load sensor or a pressure sensor. The load sensor may be, for example, of a strain gauge type, may be of a capacitance type, and may be of a piezoelectric type. The pressure sensor is, for example, of a contact type. Each of the load sensor and the pressure sensor may be, for example, a cloth-like sensor.

There is no particular limitation on a form in which the reactive-force-information-acquisition section acquires information. For example, the reactive-force-information-acquisition section may be configured to acquire information by measurement and may be configured to estimate necessary information from measured data to acquire the necessary information.

The reactive-force-information-acquisition section may be configured to acquire information related to temporal change in the reactive force received by the rider from the straddled vehicle. In this case, the reactive-force-information-acquisition section acquires information (specifically, information related to the motion input of the rider) related to the steering input of the rider to the straddled vehicle using the information related to the temporal change in the reactive force received by the rider from the straddled vehicle. Therefore, the vehicle behavior of the straddled vehicle during travel can be grasped with higher accuracy.

The motion-input-information-acquisition section may be configured to acquire the information related to the motion input of the rider to the straddled vehicle, based on information acquired from the posture-information-acquisition section and information acquired from the reactive-force-information-acquisition section.

The motion-input-information-acquisition section may include the muscle-activity-information-acquisition section. The muscle-activity-information-acquisition section acquires information related to the muscle activity of the rider.

There is no particular limitation on the muscle activity of the rider, as long as the muscle activity is activity related to the motion input of the rider to the straddled vehicle. The muscle activity of the rider is reflected to the posture of the rider and the reactive force received by the rider from the straddled vehicle in most cases. The posture of the rider changes based on results of the muscle activity of the rider.

Information related to the muscle activity of the rider is necessary information for specifying the muscle activity of the rider. The information related to the muscle activity of the rider includes, for example, a joint torque due to the muscle activity of the rider.

There is no particular limitation on a form in which the muscle-activity-information-acquisition section acquires information. For example, the muscle-activity-information-acquisition section may be configured to acquire information by measurement and may be configured to estimate necessary information from measured data to acquire the necessary information.

The muscle-activity-information-acquisition section may be configured to acquire the information related to the muscle activity of the rider, based on the information acquired from the posture-information-acquisition section and the information acquired from the reactive-force-information-acquisition section. This is because the muscle activity of the rider is reflected to the posture of the rider and the reactive force received by the rider from the straddled vehicle in most cases.

The motion-input-information-acquisition section may further include a vehicle-information-acquisition section. The vehicle-information-acquisition section acquires information related to the vehicle behavior.

The information related to the vehicle behavior is necessary information for specifying the vehicle behavior. The information related to the vehicle behavior is, for example, vehicle speed, acceleration, angle speed, a posture of a vehicle (a pitch angle or a roll angle), a suspension stoke amount, or the like.

There is no particular limitation on a form in which the vehicle-information-acquisition section acquires information. For example, the vehicle-information-acquisition section may be configured to acquire information by measurement and may be configured to estimate necessary information from measured data to acquire the necessary information.

In a case where the steering input information acquisition device further includes the vehicle-information-acquisition section, the muscle-activity-information-acquisition section may be configured to acquire the information related to the muscle activity of the rider, based on the information acquired from the posture-information-acquisition section, the information acquired from the reactive-force-information-acquisition section, and information acquired from the vehicle-information-acquisition section. This is because the muscle activity of the rider is reflected to the posture of the rider, the reactive force received by the rider from the straddled vehicle, and an inertial force accompanying the vehicle behavior in most cases.

The muscle-activity-information-acquisition section may be configured to acquire information related to temporal change in the muscle activity of the rider. In this case, the muscle-activity-information-acquisition section acquires the information related to the steering input of the rider to the straddled vehicle using the information related to the temporal change in the muscle activity of the rider. Therefore, the vehicle behavior of the straddled vehicle during travel can be grasped with higher accuracy.

The vehicle-information-acquisition section may be configured to acquire information related to temporal change in the vehicle behavior. The reactive-force-information-acquisition section may be configured to acquire the information related to the temporal change in the reactive force received by the rider from the vehicle.

The terminology used herein is used for the purpose of describing particular embodiments only and is not intended to be limiting the present teaching.

As used herein, the term "and/or" includes any and all combinations of one or more of the associated listed items.

As used herein, the terms "including," "comprising," or "having" and variations thereof specify the presence of stated features, steps, elements, components, and/or equivalents thereof, but do not preclude the presence or addition of one or more other steps, operations, elements, components, and/or groups thereof.

As used herein, the terms "mounted," "connected," "coupled," and/or equivalents thereof are used in a broad sense and include both of "direct" or "indirect" mounting, connection, and coupling. Furthermore, "connected" or "coupled" is not limited to physical or mechanical connections or couplings and may include direct or indirect connections or couplings.

Unless otherwise defined, all terms (including technical and scientific terms) used herein have the same meaning as commonly understood by one having ordinary skill in the art to which the present teaching belongs.

Terms, such as those defined in commonly used dictionaries, should be interpreted as having a meaning that is consistent with their meaning in the context of the relevant art and the present disclosure and will not be interpreted in an idealized or overly formal sense unless expressly so defined herein.

In describing the present teaching, it will be understood that a number of techniques and steps are disclosed. Each of these has individual benefit and each can also be used in conjunction with one or more or, in some cases, all of the other disclosed techniques.

Accordingly, for the sake of clarity, the description of the present teaching will refrain from repeating every possible combination of the individual steps in an unnecessary fashion. Nevertheless, the specification and claims should be read with the understanding that such combinations are entirely within the scope of the invention and the claims.

Embodiments of a steering input information acquisition device according to the present teaching will be described herein.

In the following description, numerous specific examples are set forth in order to provide a thorough understanding of the present teaching. It will be evident, however, to one skilled in the art that the present teaching may be practiced without these specific details.

The present disclosure is to be considered as an exemplification of the present teaching, and is not intended to limit the present teaching to the specific embodiments illustrated by the figures or description below.

### [Definition of Steering Input]

As used herein, "the steering input" is an input that includes a motion input of a rider to a straddled vehicle and an operation input of the rider to an operation member of the straddled vehicle.

### [Definition of Motion Input]

As used herein, "the motion input of the rider to the straddled vehicle" incudes a posture of the rider, a reactive force received by the rider from the straddled vehicle, the muscle activity of the rider, or the like.

### [Definition of Operation Input]

As used herein, "the operation input of the rider to the operation member of the straddled vehicle" means operating the operation member of the straddled vehicle by the rider.

### [Definition of Operation Member]

As used herein, the operation member is a structure used for operating the straddled vehicle. Examples of the operation member include, for example, an accelerator operation member, a front brake operation member, a rear brake operation member, a handle, a clutch operation member, a shift operation member, or the like. The operation member may be formed of a component or a portion of the component.

### [Definition of Vehicle Behavior]

As used herein, "the vehicle behavior" means motion generated on the straddled vehicle by the motion input and the operation input of the rider. Examples of the vehicle behavior include, for example, vehicle speed, acceleration, angle speed, a posture of a vehicle (a pitch angle, a roll angle, and a yaw angle), a suspension stoke amount, or the like. Also, examples of the vehicle behavior include, for example, acceleration, deceleration, turning, or the like during travel.

### [Definition of Straddled vehicle]

As used herein, the straddled vehicle is a vehicle on which the rider rides on in a state in which the rider bestrides a saddle. Examples of the straddled vehicle include a motorcycle, a tricycle, or the like. Examples of the motorcycle include a scooter-type motorcycle. The straddle vehicle includes at least one front wheel. The straddle vehicle includes at least one rear wheel. Examples of the straddle vehicle include a leaning vehicle. The leaning vehicle is a vehicle a vehicle body of which leans to left when turning to left and leans to right when turning to right. Examples of the leaning vehicle include a motorcycle.

### ADVANTAGEOUS EFFECTS OF INVENTION

With the steering input information acquisition device according to an embodiment of the present teaching, information related to a steering input of an operator, which is necessary for grasping a behavior of an operation target, can be acquired.

### BRIEF DESCRIPTION OF DRAWINGS

[FIG. 1] FIG. 1 is a schematic view illustrating a straddled vehicle including a steering input information acquisition device according to an embodiment of the present teaching.
[FIG. 2] FIG. 2 is a functional block diagram of a steering input information acquisition device according to an embodiment of the present teaching.
[FIG. 3] FIG. 3 is a flowchart illustrating steering input information acquisition processing executed by the steering input information acquisition device illustrated in FIG. 2.
[FIG. 4] FIG. 4 is a chart illustrating a process of acquiring steering input information.
[FIG. 5] FIG. 5 is a diagram schematically illustrating an example of acquisition of steering input information by a steering input information acquisition device.
[FIG. 6] FIG. 6 is a diagram schematically illustrating an outline structure of a steering input information acquisition device and a process of acquiring steering input information by a steering input information acquisition device.

### DESCRIPTION OF EMBODIMENTS

Embodiments of the present teaching will be described in detail with reference to the accompanying drawings. In the drawings, the same or corresponding parts are denoted by the same reference sign and the description of the parts is not repeated.

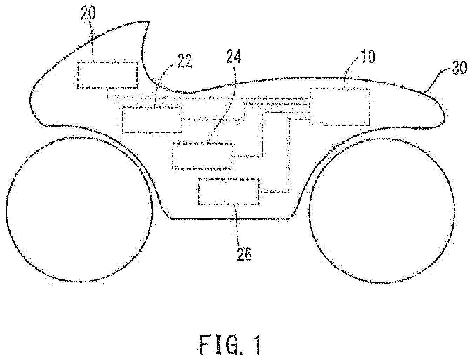

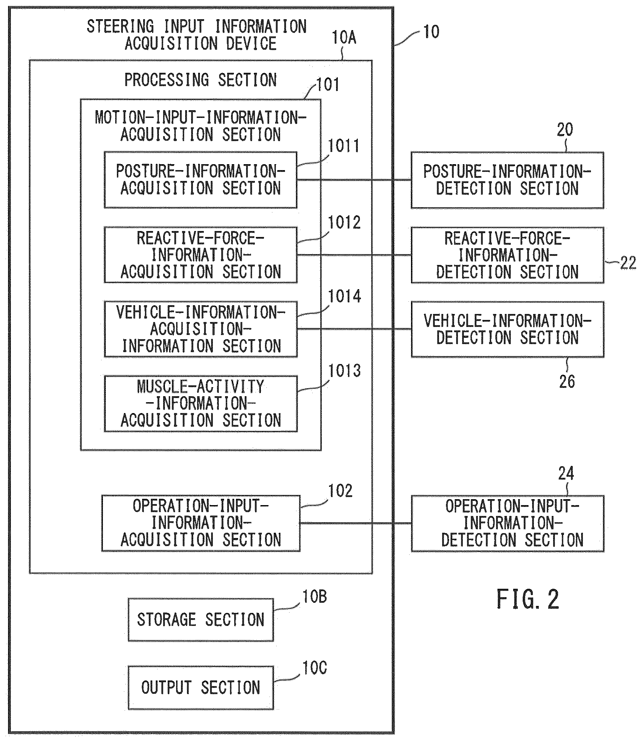

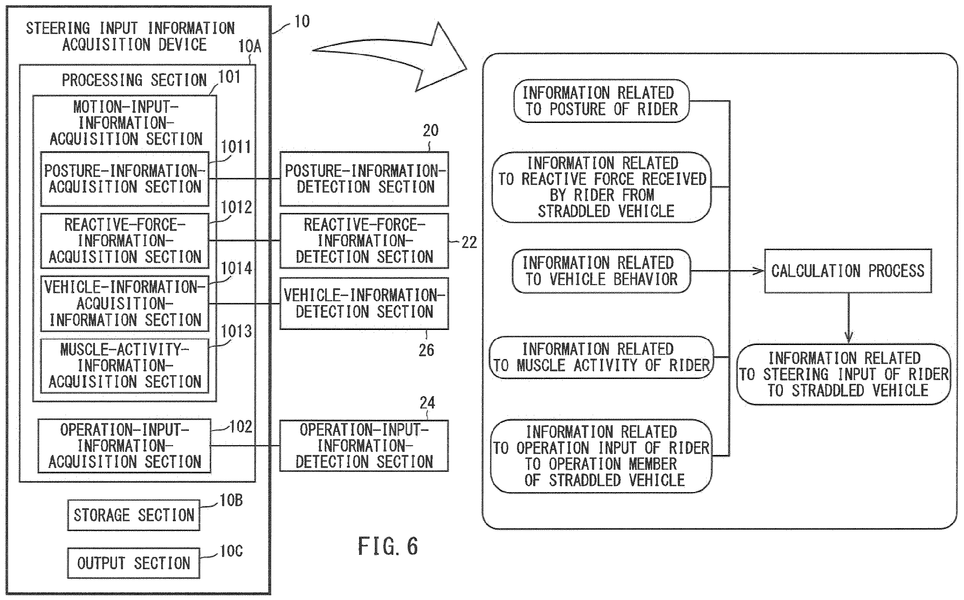

FIG. 1 is a schematic view illustrating a straddled vehicle 30 (an operation subject) including a steering input information acquisition device 10 according to an embodiment of the present teaching. FIG. 2 is a functional block diagram of the steering input information acquisition device 10 according to an embodiment of the present teaching. FIG. 6 is a diagram schematically illustrating an outline structure of the steering input information acquisition device 10 and a process of acquiring steering input information by the steering input information acquisition device 10.

The steering input information acquisition device 10 acquires information related to a steering input by a rider (an operator) to the straddled vehicle 30. Each information is input to the steering input information acquisition device 10 from a posture-information-detection section 20, a reactive-force-information-detection section 22, an operation-input-information-detection section 24, and a vehicle-information-detection section 26. Note that, in FIG. 1, the steering input information acquisition device 10 is disposed in the straddled vehicle 30, but the steering input information acquisition device 10 may be disposed in a position other than the straddled vehicle 30.

The steering input information acquisition device 10 includes a processing section 10A, a storage section 10B, and an output section 10C. The processing section 10A performs processing of acquiring information related to a steering input of the rider to the straddled vehicle 30. The storage section 10B stores necessary information (for example, a program, parameters for executing the program, or the like) for processing by the processing section 10A. The output section 10C outputs information that has been processed by the processing section 10A to outside of the steering input information acquisition device 10. The information that has been processed by the processing section 10A is stored in the storage section 10B. Note that the information that has been processed by the processing section 10A may be output from the steering input information acquisition device 10 by the output section 10C without being stored in the storage section 10B. As another option, the information that has been processed by the processing section 10A may be output to the outside from the output section 10C and be stored in an external device.

The steering input information acquisition device 10 is realized by a computer including, for example, a CPU, a RAM, a ROM, a ROM, an external storage device, or the like. Specifically, the processing section 10A is a function section which employs the CPU as a calculation processing section and the RAM as a work area and is realized by execution of a program stored in the RAM or the ROM. The storage section 10B includes the RAM or the ROM. The RAM is used as a work area when the CPU executes the program. Also, various types of programs, setting data, or the like, which are executed by the steering input information acquisition device 10, are stored in the RAM or the ROM.

The processing section 10A includes a motion-input-information-acquisition section 101 and an operation-input-information-acquisition section 102. The motion-input-information-acquisition section 101 is a function section realized by execution of a motion input information acquisition program stored in the RAM or the ROM on the calculation processing section, such as the CPU or the like. Note that, as will be described later, the motion input information acquisition program includes a plurality of programs. The operation-input-information-acquisition section 102 is a function section realized by execution of an operation input information acquisition program stored in the RAM or the ROM on the calculation processing section, such as the CPU or the like.

However, the motion-input-information-acquisition section 101 or the operation-input-information-acquisition section 102 may be formed of a hardware. As another option, a portion of the motion-input-information-acquisition section 101 or the operation-input-information-acquisition section 102 may be formed of a hardware and another portion thereof may be formed of a function section realized by execution of a program.

The motion-input-information-acquisition section 101 acquires information related to a motion input of the rider to the straddled vehicle 30. The motion input of the rider is an input that causes a vehicle behavior of the straddled vehicle 30 (a behavior of the operation subject) to occur. The vehicle behavior of the straddled vehicle 30 includes, for example, acceleration, deceleration, turning, or the like during travel.

The input that causes the vehicle behavior of the straddled vehicle 30 to occur includes the motion input of the rider to the straddled vehicle 30 and the operation input of the rider to an operation member of the straddled vehicle 30. The information related to the motion input of the rider includes information related to a posture of the rider, information related to a reactive force received by the rider from the straddled vehicle 30, and information related to muscle activity of the rider.

The motion-input-information-acquisition section 101 includes a posture-information-acquisition section 1011, a reactive-force-information-acquisition section 1012, a vehicle-information-acquisition section 1014 (an operation-subject-information-acquisition section), and a muscle-activity-information-acquisition section 1013. The posture-information-acquisition section 1011 is a function section realized by execution of a posture information acquisition program stored in the RAM or the ROM on the calculation processing section, such as the CPU or the like. The reactive-force-information-acquisition section 1012 is a function section realized by execution of a reactive force information acquisition program stored in the RAM or the ROM on the calculation processing section, such as the CPU or the like. The vehicle-information-acquisition section 1014 is a function section realized by execution of a vehicle information acquisition program stored in the RAM or the ROM on the calculation processing section, such as the CPU or the like. The muscle-activity-information-acquisition section 1013 is a function section realized by execution of a muscle activity information acquisition program stored in the RAM or the ROM on the calculation processing section, such as the CPU or the like. The function sections realized by execution of these programs will be described below.

Note that the posture-information-acquisition section 1011, the reactive-force-information-acquisition section 1012, the vehicle-information-acquisition section 1014, or the muscle-activity-information-acquisition section 1013 may be formed of a hardware. As another option, a portion of the posture-information-acquisition section 1011, the reactive-force-information-acquisition section 1012, the vehicle-information-acquisition section 1014, or the muscle-activity-information-acquisition section 1013 may be formed of a hardware and another portion thereof may be formed of a function section realized by execution of a program.

The posture-information-acquisition section 1011 acquires information related to the posture of the rider. Information related to the posture of the rider is necessary information for specifying the posture of the rider. Specifically, the information related to the posture of the rider is necessary data (for example, positional information) for specifying positions of head, shoulders, elbows, or the like of the rider. The posture of the rider is specified, for example, by grasping positions of joints of the rider. The posture of the rider includes, for example, a visual line (that is, movements of eyeballs) of the rider.

As illustrated in FIG. 2, the information related to the posture of the rider is input to the posture-information-acquisition section 1011 from the posture-information-detection section 20. The posture-information-detection section 20 detects the information related to the posture of the rider. Note that, in FIG. 2, only one posture-information-detection section 20 is illustrated, but a plurality of posture-information-detection sections 20 may be provided, for example, in accordance with the number, type, or the like of information that is detected.

The posture-information-detection section 20 and the posture-information-acquisition section 1011 may be connected to each other via a wired communication and may be connected to each other via a wireless communication, as long as information can be input to the posture-information-acquisition section 1011 from the posture-information-detection section 20.

The posture-information-detection section 20 is, for example, a camera or a sensor. There is no particular limitation on a structure of the camera, as long as the camera can be provided in the straddled vehicle 30. The camera may be, for example, a monocular camera and may be a stereo camera. There is no particular limitation on a position in which the camera is provided in the straddled vehicle 30, as long as the position is a position in which the information related to the posture of the rider can be acquired. The camera is provided, for example, in a handle or the like of the straddled vehicle 30. The sensor may be provided in the straddled vehicle 30 and may be provided to the rider. In a case where the sensor is provided to the rider, for example, as one option, the sensor is provided on clothing of the rider. The sensor may be, for example, an inertial sensor. The sensor may be, for example, a cloth-like sensor.

There is no particular limitation on a form in which the posture-information-acquisition section 1011 acquires information. For example, the posture-information-acquisition section 1011 may be configured to acquire information that has been detected by the posture-information-detection section 20 as it is and may be configured to estimate necessary information from the information that has been detected by the posture-information-detection section 20 to acquire the necessary information. The posture-information-acquisition section 1011 may be configured to acquire information related to temporal change in the posture of the rider.

The posture-information-acquisition section 1011 is able to estimate the posture of the rider, based on information (the information related to the posture of the rider) which has been acquired. Specifically, the posture-information-acquisition section 1011 estimates the posture of the rider in a manner described below.

### <Generation of Digital Mannequin>

The posture-information-acquisition section 1011 generates a digital mannequin having an equal body size to that of the rider. The digital mannequin is generated, for example, by using a known technology. There is no particular limitation on a technology used for generating the digital mannequin, as long as the digital mannequin can be generated. The digital mannequin is generated, for example, by using three-dimensional modeling by CAD. The digital mannequin is, for example, a human body model generated by a computer mannequin. The computer mannequin is a software tool used for virtually evaluating human body size compatibility between a product on CAD and a user.

### <Estimation of Riding Posture of Rider>

The posture-information-acquisition section 1011 estimates a riding posture of the rider, based on a product form of the straddled vehicle 30 on which the rider rides, physical constitution information of the rider, and contact conditions for the rider to the straddled vehicle 30. The above described digital mannequin is used for estimation of the riding posture of the rider.

The product form of the straddled vehicle 30 is acquired, for example, by measuring actual dimensions of the straddled vehicle 30. The physical constitution information of the rider is acquired, for example, by using data that was used when the above described digital mannequin was generated. There is no particular limitation on the contact conditions, as long as the contact conditions are conditions under which a portion of a body of the rider and a portion of the straddled vehicle 30 contact each other. There may be one or more contact positions of the body of the rider and the straddled vehicle 30. For example, in a state in which the rider is riding on the straddled vehicle 30, a right hand of the rider holds a right grip, a left hand of the rider holds a left grip, a right foot of the rider is on a right step, and a left foot of the rider is on a left step. These states may be used as the contact conditions.

The rising posture of the rider is estimated, for example, by using a known technology. There is no particular limitation on a technology of estimating the riding posture of the rider, as long as the riding posture of the rider can be estimated.

### <Complementing Estimated Riding Posture of Rider>

The posture-information-acquisition section 1011 measures the body position of the rider in a state in which the rider actually is riding on the straddled vehicle 30 and complements the riding posture of the rider which has been estimated in the above described manner. This is because the accurate riding posture of the rider is not determined only by using the product form of the straddled vehicle 30 on which the rider rides, the physical constitution information of the rider, and the contact conditions for the rider to the straddled vehicle 30. That is, for example, in a case where, in a state in which the rider is riding on the straddled vehicle 30, the above described contact conditions are that the right hand of the rider holds the right grip, the left hand of the rider holds the left grip, the right foot of the rider is on the right step, and the left foot of the rider is on the left step, the rider can freely move an upper half of the body (specifically, the head, the shoulders, and arms) and a lower half of the body (specifically, buttocks and knees).

As a technology used for measuring the body position of the rider who is riding on the straddled vehicle 30, for example, motion capture may be used. Specifically, a marker attached to the clothing of the rider may be photographed by the camera as the posture-information-detection section 20 and the body position of the rider who is riding on the straddled vehicle 30 may be measured based on a taken image.

As described above, the posture-information-acquisition section 1011 is able to estimate the posture of the rider by complementing the riding posture of the rider. Note that the posture-information-acquisition section 1011 may be configured to calculate a gravity center position of the body of the rider by using the riding posture of the rider, which has been complemented.

The reactive-force-information-acquisition section 1012 acquires information related to a reactive force received by the rider from the straddled vehicle 30. The reactive force received by the rider from the straddled vehicle 30 occurs due to input of a load to the straddled vehicle 30 by the rider. That is, the rider receives the reactive force from the straddled vehicle 30 in a portion in which the rider contacts the straddled vehicle 30. The portions in which the rider contacts the straddled vehicle 30 are, for example, the grips that the rider holds, the steps on which the rider puts the feet, the seat on which the rider sits, the fuel tank on which the rider maintains a knee grip posture, or the like.

Information related to the reactive force received by the rider from the straddled vehicle 30 is necessary information for specifying the reactive force received by the rider from the straddled vehicle 30. Specifically, the information related to the reactive force is necessary data (for example, a load) for specifying a force received by the rider from the portion in which the rider contacts the straddled vehicle 30 (or a force applied by the rider to the portion).

As illustrated in FIG. 2, the information related to the reactive force received by the rider from the straddled vehicle 30 is input to the reactive-force-information-acquisition section 1012 from the reactive-force-information-detection section 22. The reactive-force-information-detection section 22 detects the information related to the reactive force received by the rider from the straddled vehicle 30. Note that, in FIG. 2, only one reactive-force-information-detection section 22 is illustrated but a plurality of reactive-force-information-detection sections 22 may be provided, for example, in accordance with the number, type, or the like of information that is detected.

The reactive-force-information-detection section 22 and the reactive-force-information-acquisition section 1012 may be connected to each other via a wired communication and may be connected to each other via a wireless communication, as long as information can be input to the reactive-force-information-acquisition section 1012 from the reactive-force-information-detection section 22.

The reactive-force-information-detection section 22 is, for example, a sensor. There is no particular limitation on a structure of the sensor, as long as the sensor can be provided in the straddled vehicle 30. The sensor is, for example, a load sensor or a pressure sensor. The load sensor may be, for example, of a strain gauge type, may be of a capacitance type, and may be of a piezoelectric type. The pressure sensor is, for example, of a contact type. Each of the load sensor and the pressure sensor may be, for example, a cloth-like sensor.

There is no particular limitation on a form in which the reactive-force-information-acquisition section 1012 acquires information. For example, the reactive-force-information-acquisition section 1012 may be configured to acquire information that has been detected by the reactive-force-information-detection section 22 as it is and may be configured to estimate necessary information from the information that has been detected by the reactive-force-information-detection section 22 to acquire the necessary information. The reactive-force-information-acquisition section 1012 may be configured to acquire information related to temporal change in the reactive force received by the rider from the straddled vehicle 30.

The vehicle-information-acquisition section 1014 acquires information related to a vehicle behavior.

The information related to the vehicle behavior is necessary information for specifying the vehicle behavior. The information related to the vehicle behavior is, for example, vehicle speed, acceleration, angle speed, a posture of a vehicle (a pitch angle or a roll angle), a suspension stoke amount, or the like.

As illustrated in FIG. 2, the information related to the vehicle behavior is input to the vehicle-information-acquisition section 1014 from the vehicle-information-detection section 26. The vehicle-information-detection section 26 detects the information related to the vehicle behavior. Note that, in FIG. 2, only one vehicle-information-detection section 26 is illustrated, but a plurality of vehicle-information-detection sections 26 may be provided, for example, in accordance with the number, type, or the like of information that is detected.

The vehicle-information-detection section 26 and the vehicle-information-acquisition section 1014 may be connected to each other via a wired communication and may be connected to each other via a wireless communication, as long as information can be input to the vehicle-information-acquisition section 1014 from the vehicle-information-detection section 26.

The vehicle-information-detection section 26 is, for example, a sensor. There is no particular limitation on a structure of the sensor, as long as the sensor can be provided in the straddled vehicle 30. The sensor is, for example, a vehicle posture detection sensor (a pitch angle detection sensor, a roll angle detection sensor, an acceleration detection sensor, or an angle speed detection sensor), a suspension stroke amount detection sensor, or a vehicle speed sensor.

There is no particular limitation on a form in which the vehicle-information-acquisition section 1014 acquires information. For example, the vehicle-information-acquisition section 1014 may be configured to acquire information that has been detected by the vehicle-information-detection section 26 as it is and may be configured to estimate necessary information from the information that has been detected by the vehicle-information-detection section 26 to acquire the necessary information. The vehicle-information-acquisition section 1014 may be configured to acquire the information related to temporal change in the vehicle behavior.

The muscle-activity-information-acquisition section 1013 acquires information related to the muscle activity of the rider. There is no particular limitation on the muscle activity of the rider, as long as the muscle activity is activity related to the motion input of the rider to the straddled vehicle 30. The muscle activity of the rider is reflected to the posture of the rider and the reactive force received by the rider from the straddled vehicle 30 in most cases. The posture of the rider changes based on a result of the muscle activity of the rider.

The information related to the muscle activity of the rider is necessary information for specifying the muscle activity of the rider. The information related to the muscle activity of the rider includes, for example, a joint torque due to the muscle activity of the rider.

The muscle-activity-information-acquisition section 1013 acquires the information related to the muscle activity of the rider, based on information acquired from the posture-information-acquisition section 1011, information acquired from the reactive-force-information-acquisition section 1012, and information acquired from the vehicle-information-acquisition section 1014. This is because the muscle activity of the rider is reflected to the posture of the rider, the reactive force received by the rider from the straddled vehicle 30, and inertial force accompanying the vehicle behavior, such as acceleration, deceleration, turning, or the like, in most cases. The muscle-activity-information-acquisition section 1013 may be configured to acquire information related to temporal change in the muscle activity of the rider.

The muscle-activity-information-acquisition section 1013 is able to estimate the muscle activity of the rider, based on information (the information related to the muscle activity of the rider) which has been acquired. Specifically, the muscle-activity-information-acquisition section 1013 estimates the muscle activity of the rider in a manner described below.

The muscle-activity-information-acquisition section 1013 estimates a joint torque of the body of the rider, based on the information acquired by the posture-information-acquisition section 1011, the information acquired by the reactive-force-information-acquisition section 1012, and the information acquired by the vehicle-information-acquisition section 1014. The joint torque is estimated, for example, by using a known technology (for example, Supervised by the Clinical Gait Analysis Forum, edited by Yoshihiro Ehara, Sumiko Yamamoto, 2008, "Rinshou Hokou Keisoku Nyumon (Getting Started Clinical Gait Measurement), Ishiyaku Publishers, Inc., pp.139-141). There is no particular limitation on the technology used for estimating the joint torque, as long as the joint torque can be estimated by the technology.

The muscle-activity-information-acquisition section 1013 estimates the muscle activity of the rider, based on the joint torque that has been estimated in the above described manner and the information acquired by the posture-information-acquisition section 1011, by using a known technology (for example, Japanese Patent Application Publication No. 2017-86184, Kazutaka Kurihara, et al., 2002, "Musculoskeketal Dynamic Calculation from Inverse Kinematics of Minute Detail Human Body Model Using Motion Capture", RSJ 20th Anniversary Special Lectures, or the like). Note that the muscle activity of the rider may be estimated from a direct measurement value of muscle activity, such as a surface myoelectric potential or the like.

The operation-input-information-acquisition section 102 acquires information related to an operation input of the rider to the operation member of the straddled vehicle 30. The operation member includes, for example, an accelerator operation member, a front brake operation member, a rear brake operation member, a handle, a clutch operation member, a shift operation member, or the like. The operation input of the rider to the operation member is an input that causes the vehicle behavior of the straddled vehicle 30 to occur. The information related to the operation input of the rider to the operation member of the straddled vehicle 30 is, for example, an operation amount of the operation member.

As illustrated in FIG. 2, the information related to the operation input of the rider is input to the operation-input-information-acquisition section 102 from the operation-input-information-detection section 24. The operation-input-information-detection section 24 detects the information related to the operation input of the rider to the operation member of the straddled vehicle 30. Note that, in FIG. 2, only one operation-input-information-detection section 24 is illustrated but a plurality of operation-input-information-detection sections 24 may be provided, for example, in accordance with the number, type, or the like of information that is detected.

The operation-input-information-detection section 24 and the operation-input-information-acquisition section 102 may be connected to each other via a wired communication and may be connected to each other via a wireless communication, as long as information can be input to the operation-input-information-acquisition section 102 from the operation-input-information-detection section 24.

The operation-input-information-detection section 24 is, for example, a sensor. There is no particular limitation on a structure of the sensor, as long as the operation amount of the operation member can be measured. The sensor is, for example, a position sensor. The position sensor may be of a contact type and may be of a non-contact type. The position sensor may be, for example, a sensor using ultrasonic waves, may be a sensor using magnetism, and may be a sensor using light.

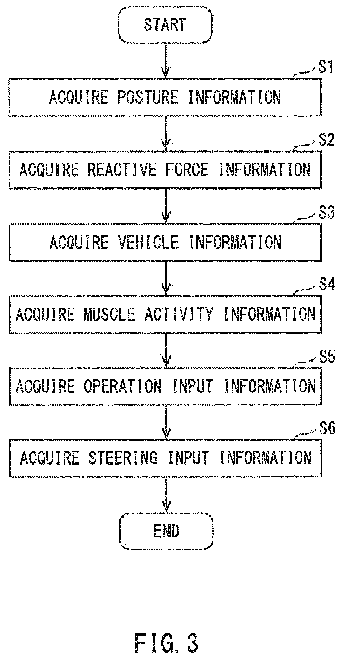

Subsequently, steering input information acquisition processing executed by the steering input information acquisition device 10 will be described with reference to FIG. 3. FIG. 3 is a flowchart illustrating steering input information acquisition processing executed by the steering input information acquisition device 10.

First, the steering input information acquisition device 10 (specifically, the posture-information-acquisition section 1011) acquires the information (posture information in FIG. 3) related to the posture of the rider in Step S1.

Subsequently, the steering input information acquisition device 10 (specifically, the reactive-force-information-acquisition section 1012) acquires the information (reactive force information in FIG. 3) related to the reactive force received by the rider from the straddled vehicle 30 in Step S2.

Subsequently, the steering input information acquisition device 10 (specifically, the vehicle-information-acquisition section 1014) acquires the information (vehicle information in FIG. 3) related to the vehicle behavior in Step S3.

Subsequently, the steering input information acquisition device 10 (specifically, the muscle-activity-information-acquisition section 1013) acquires the information (muscle activity information in FIG. 3) related to the muscle activity of the rider in Step S4.

Subsequently, the steering input information acquisition device 10 (specifically, the operation-input-information-acquisition section 102) acquires the information (operation input information in FIG. 3) related to the operation input of the rider to the operation member of the straddled vehicle 30 in Step S5.

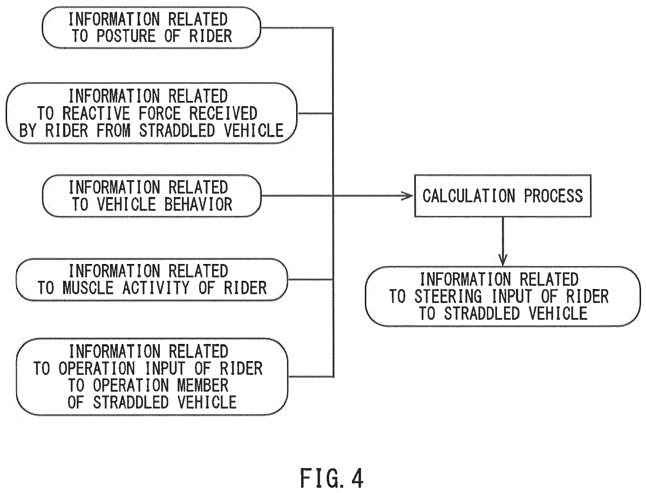

Subsequently, the steering input information acquisition device 10 (specifically, the processing section 10A) acquires, based on the information acquired in Steps S1 to S5 described above, the information (steering input information in FIG. 3) related to the steering input of the rider to the straddled vehicle 30 in Step S6. For example, as illustrated in FIG. 4, the steering input information acquisition device 10 acquires information related to the steering input of the rider to the straddled vehicle 30 by performing calculation using the information related to the posture of the rider, the information related to the reactive force received by the rider from the straddled vehicle 30, the information related to the vehicle behavior, the information related to the muscle activity of the rider, and the information related to the operation input of the rider to the operation member of the straddled vehicle 30. Specifically, the steering input information acquisition device 10 acquires a correlation between information acquired by performing calculation using the information related to the posture of the rider, the information related to the reactive force received by the rider from the straddled vehicle 30, the information related to the vehicle behavior, and the information related to the muscle activity of the rider, and the information related to the operation input of the rider to the operation member of the straddled vehicle 30. That is, as the information related to the steering input of the rider to the straddled vehicle 30, for example, information indicating a correlation between information related to the motion input of the rider to the straddled vehicle 30 and the information related to the operation input of the rider to the operation member of the straddled vehicle 30 or the like can be used.

After processing of Step S6 described above ends, the steering input information acquisition device 10 terminates the steering input information acquisition processing.

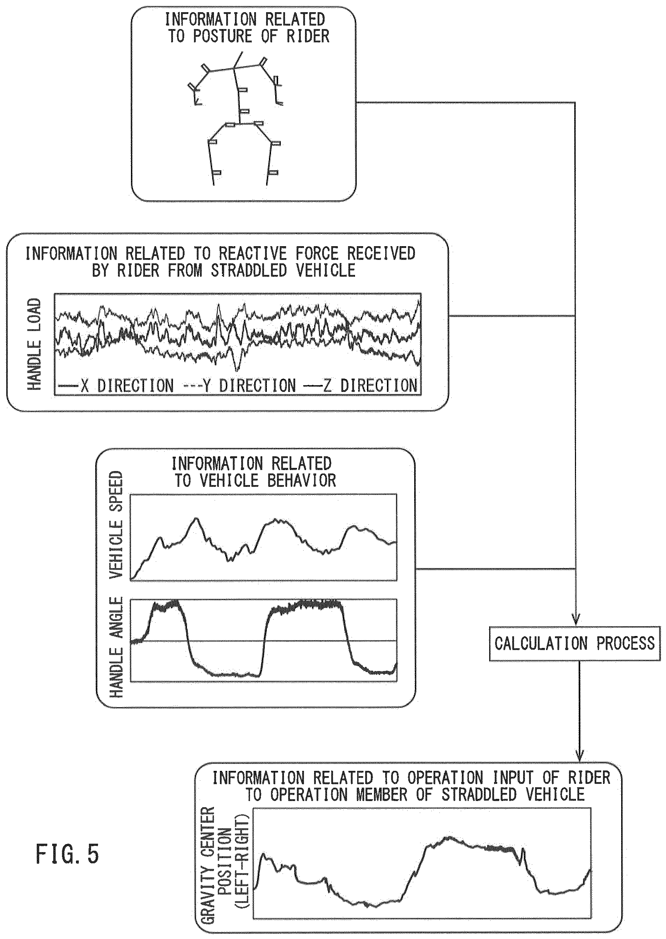

FIG. 5 is a diagram schematically illustrating an example of acquisition of steering input information by the steering input information acquisition device 10. In the example illustrated in FIG. 5, when the rider drives the straddled vehicle 30 to meander at low speed, the steering input information acquisition device 10 acquires the information (steering input information) related to the steering input of the rider to the straddled vehicle 30 by performing calculation using the information related to the posture of the rider, the information related to the reactive force received by the rider from the straddled vehicle 30, and the information related to the vehicle behavior.

In FIG. 5, the information related to the posture of the rider, the information related to the reactive force received by the rider from the straddled vehicle 30, the information related to the vehicle behavior, and the steering input information are as described below.

The information related to the posture of the rider is, for example, information obtained by reproducing the physical constitution information of the rider who is riding on the straddled vehicle 30 by a digital mannequin or the like and complementing the physical constitution information of the rider, which has been reproduced, with results of measurements of the body position of the rider by motion capture or the like.

The information related to the reactive force received by the rider from the straddled vehicle 30 is, for example, a handle load in an X direction, a Y direction, and a Z direction. The handle load is a load generated on the handle by handling of the rider when the rider is riding on the straddled vehicle 30. The rider receives a load corresponding to the handle load as the reactive force from the straddled vehicle 30.

The information related to the vehicle behavior is the vehicle speed of the straddled vehicle 30 and a handle angle as a steering angle of the handle.

The steering input information is a gravity center position in a left-right direction of the rider who is riding on the straddled vehicle 30.

The steering input information acquisition device 10 is able to obtain the gravity center position in the left-right direction of the rider as the steering input information using the information related to the posture of the rider, the information related to the reactive force received by the rider from the straddled vehicle 30, and the information related to the vehicle behavior. Also, the steering input information acquisition device 10 is able to acquire information related to the joint torque or the muscle activity from the information related to the posture of the rider and the information related to the reactive force received by the rider from the straddled vehicle 30. Furthermore, the steering input information acquisition device 10 is also able to calculate a stability evaluation index from the information related to the reactive force received by the rider from the straddled vehicle 30 and the information related to the vehicle behavior. Note that the stability evaluation index is, for example, a resistance received by the hands of the rider who holds the handle.

As described above, the steering input information acquisition device 10 acquires, based on the information acquired from the motion-input-information-acquisition section 101 and the information acquired from the operation-input-information-acquisition section 102, the information related to the steering input of the rider to the straddled vehicle 30. Therefore, the behavior of the straddled vehicle 30 during travel can be grasped with high accuracy.

By grasping the behavior of the straddled vehicle 30 during travel with high accuracy, for example, the behavior of the straddled vehicle 30 when a beginner steers the straddled vehicle 30 and the behavior of the straddled vehicle 30 when an expert steers the straddled vehicle 30 can be compared to each other. Using a result of the comparison, for example, a guideline used for teaching a steering of the straddled vehicle 30 to a beginner can be made.

Also, by grasping the behavior of the straddled vehicle 30 during travel with high accuracy in the above described manner, for example, information related to the behavior of the straddled vehicle 30 during travel, which has been grasped with high accuracy, can be used for the steering assistance in a device that assists steering.

The information related to the behavior of the straddled vehicle 30 during travel, which has been grasped with high accuracy in the manner described above, may be also used for creating a steering simulator of a straddled vehicle. The information related to the behavior of the straddled vehicle 30 during travel, which has been grasped with high accuracy in the manner described above, may be also displayed by a display device or the like. Furthermore, the information related to the behavior of the straddled vehicle 30 during travel, which has been grasped with high accuracy in the manner described above, may be used for control (control of a driving force, suspension setting, brake control, or the like) of a vehicle.

In the steering input information acquisition device 10, the motion-input-information-acquisition section 101 includes the muscle-activity-information-acquisition section 1013. The muscle-activity-information-acquisition section 1013 acquires, based on the information acquired by the posture-information-acquisition section 1011, the information acquired by the reactive-force-information-acquisition section 1012, and the information acquired by the vehicle-information-acquisition section 1014, the information related to the muscle activity of the rider. Therefore, for example, as compared to a case where a sensor configured to measure the myoelectric potential is used, it is easier to acquire the information related to the muscle activity of the rider.

An embodiment of the present teaching has been described above, but the above-described embodiment is merely an illustrative example of a preferred embodiment of the present teaching. Therefore, the present teaching is not limited to the above-described embodiment and the above-described embodiment can be appropriately modified and implemented without departing from the scope of the claims.

### REFERENCE SIGNS LIST

10 Steering input information acquisition device
30 Straddled vehicle (operation subject)
101 Motion-input-information-acquisition section
1011 Posture-information-acquisition section
1012 Reactive-force-information-acquisition section
1013 Muscle-activity-information-acquisition section
1014 Vehicle-information-acquisition section (operation-subject-information-acquisition section)
102 Operation-input-information-acquisition section

## Claims

1. A steering input information acquisition device (10) configured to acquire information related to a steering input of a rider to a straddled vehicle (30), the steering input information acquisition device (10) comprising:
a motion-input-information-acquisition section (101) configured to acquire information that includes information related to a posture of the rider, information related to a reactive force received by the rider from the straddled vehicle (30), and information related to muscle activity of the rider and that is related to a motion input of the rider to the straddled vehicle (30), the motion input causing a vehicle behavior of the straddled vehicle (30) to occur; and
an operation-input-information-acquisition section (102) configured to acquire information that is related to an operation input of the rider to an operation member of the straddled vehicle (30), the operation input causing the vehicle behavior to occur, wherein the steering input information acquisition device (10) acquires the information related to the steering input, based on information acquired from the motion-input-information-acquisition section (101) and the operation-input-information-acquisition section (102).

2. The steering input information acquisition device (10) according to claim 1, wherein the motion-input-information-acquisition section (101) includes
a posture-information-acquisition section (1011) configured to acquire information related to the posture of the rider, and
a reactive-force-information-acquisition section (1012) configured to acquire information related to the reactive force received by the rider from the straddled vehicle (30), and
the motion-input-information-acquisition section (101) is configured to acquire the information related to the motion input, based on information acquired from the posture-information-acquisition section (1011) and the reactive-force-information-acquisition section (1012).

3. The steering input information acquisition device (10) according to claim 2,
wherein the motion-input-information-acquisition section (101) includes a muscle-activity-information-acquisition section (1013) configured to acquire information related to the muscle activity of the rider.

4. The steering input information acquisition device (10) according to claim 3,
wherein the muscle-activity-information-acquisition section (1013) is configured to acquire the information related to the muscle activity of the rider, based on the information acquired from the posture-information-acquisition section (1011) and the reactive-force-information-acquisition section (1012).

5. The steering input information acquisition device (10) according to claim 3,
wherein the motion-input-information-acquisition section (101) further includes a vehicle-information-acquisition section (1014) configured to acquire information related to the vehicle behavior, and
the muscle-activity-information-acquisition section (1013) is configured to acquire the information related to the muscle activity of the rider, based on the information acquired from the posture-information-acquisition section (1011), the reactive-force-information-acquisition section (1012), and the vehicle-information-acquisition section (1014).

6. The steering input information acquisition device (10) according to claim 5,
wherein the vehicle-information-acquisition section (1014) is configured to acquire information related to temporal change in the vehicle behavior.

7. The steering input information acquisition device (10) according to any one of claims 3 to 6,
wherein the muscle-activity-information-acquisition section (1013) is configured to acquire information related to temporal change in the muscle activity of the rider.

8. The steering input information acquisition device (10) according to any one of claims 2 to 7,
wherein the posture-information-acquisition section (1011) is configured to acquire information related to temporal change in the posture of the rider.

9. The steering input information acquisition device (10) according to any one of claims 2 to 8,
wherein the reactive-force-information-acquisition section (1012) is configured to acquire information related to temporal change of the reactive force received by the rider from the straddled vehicle (30).

## Patentansprüche

1. Eine Lenkeingabeinformationserfassungsvorrichtung (10), die konfiguriert ist, Informationen zu erfassen, die sich auf eine Lenkeingabe eines Fahrers an ein Grätschsitzfahrzeug (30) beziehen, wobei die Lenkeingabeinformationserfassungsvorrichtung (10) folgende Merkmale aufweist:
einen Bewegungseingabeinformationserfassungsabschnitt (101), der konfiguriert ist, Informationen zu erfassen, die Informationen umfassen, die sich auf eine Haltung des Fahrers beziehen, Informationen, die sich auf eine Reaktionskraft beziehen, die durch den Fahrer von dem Grätschsitzfahrzeug (30) empfangen wird, und Informationen, die sich auf eine Muskelaktivität des Fahrers beziehen und die sich auf eine Bewegungseingabe des Fahrers an das Grätschsitzfahrzeug (30) beziehen, wobei die Bewegungseingabe bewirkt, dass ein Fahrzeugverhalten des Grätschsitzfahrzeugs (30) auftritt; und
einen Betriebseingabeinformationserfassungsabschnitt (102), der konfiguriert ist, Informationen zu erfassen, die sich auf eine Betriebseingabe des Fahrers an ein Betriebsbauglied des Grätschsitzfahrzeugs (30) beziehen, wobei die Betriebseingabe bewirkt, dass das Fahrzeugverhalten auftritt, wobei die Lenkeingabeinformationserfassungsvorrichtung (10) die Informationen erfasst, die sich auf die Lenkeingabe beziehen, basierend auf Informationen, die von dem Bewegungseingabeinformationserfassungsabschnitt (101) und dem Betriebseingabeinformationserfassungsabschnitt (102) erfasst werden.

2. Die Lenkeingabeinformationserfassungsvorrichtung (10) gemäß Anspruch 1,
bei der der Bewegungseingabeinformationserfassungsabschnitt (101) folgende Merkmale umfasst:
einen Haltungsinformationserfassungsabschnitt (1011), der konfiguriert ist, Informationen zu erfassen, die sich auf die Haltung des Fahrers beziehen und
einen Reaktionskraftinformationserfassungsabschnitt (1012), der konfiguriert ist, Informationen zu erfassen, die sich auf die Reaktionskraft beziehen, die durch den Fahrer von dem Grätschsitzfahrzeug (30) empfangen wird, und
der Bewegungseingabeinformationserfassungsabschnitt (101) konfiguriert ist, die Informationen zu erfassen, die sich auf die Bewegungseingabe beziehen, basierend auf Informationen, die von dem Haltungsinformationserfassungsabschnitt (1011) und dem Reaktionskraftinformationserfassungsabschnitt (1012) erfasst werden.

3. Die Lenkeingabeinformationserfassungsvorrichtung (10) gemäß Anspruch 2,
bei der der Bewegungseingabeinformationserfassungsabschnitt (101) einen Muskelaktivitätsinformationserfassungsabschnitt (1013) umfasst, der konfiguriert ist, Informationen zu erfassen, die sich auf die Muskelaktivität des Fahrers beziehen.

4. Die Lenkeingabeinformationserfassungsvorrichtung (10) gemäß Anspruch 3,
bei der der Muskeiaktivitätsinformationserfassungsabschnitt (1013) konfiguriert ist, die Informationen zu erfassen, die sich auf die Muskelaktivität des Fahrers beziehen, basierend auf den Informationen, die von dem Haltungsinformationserfassungsabschnitt (1011) und dem Reaktionskraftinformationserfassungsabschnitt (1012) erfasst werden.

5. Die Lenkeingabeinformationserfassungsvorrichtung (10) gemäß Anspruch 3,
bei der der Bewegungseingabeinformationserfassungsabschnitt (101) ferner einen Fahrzeuginformationserfassungsabschnitt (1014) umfasst, der konfiguriert ist, Informationen zu erfassen, die sich auf das Fahrzeugverhalten beziehen und
der Muskelaktivitätsinformationserfassungsabschnitt (1013) konfiguriert ist, die Informationen zu erfassen, die sich auf die Muskelaktivität des Fahrers beziehen, basierend auf den Informationen, die von dem Haltungsinformationserfassungsabschnitt (1011), dem Reaktionskraftinformationserfassungsabschnitt (1012) und dem Fahrzeuginformationserfassungsabschnitt (1014) erfasst werden.

6. Die Lenkeingabeinformationserfassungsvorrichtung (10) gemäß Anspruch 5,
bei der der Fahrzeuginformationserfassungsabschnitt (1014) konfiguriert ist, Informationen zu erfassen, die sich auf zeitliche Veränderungen des Fahrzeugverhaltens beziehen.

7. Die Lenkeingabeinformationserfassungsvorrichtung (10) gemäß einem der Ansprüche 3 bis 6,
bei der der Muskelaktivitätsinformationserfassungsabschnitt (1013) konfiguriert ist, Informationen zu erfassen, die sich auf eine zeitliche Veränderung der Muskelaktivität des Fahrers beziehen.

8. Die Lenkeingabeinformationserfassungsvorrichtung (10) gemäß einem der Ansprüche 2 bis 7,
bei der der Haltungsinformationserfassungsabschnitt (1011) konfiguriert ist, Informationen zu erfassen, die sich auf eine zeitliche Veränderung der Haltung des Fahrers beziehen.

9. Die Lenkeingabeinformationserfassungsvorrichtung (10) gemäß einem der Ansprüche 2 bis 8,
bei der der Reaktionskraftinformationserfassungsabschnitt (1012) konfiguriert ist, Informationen zu erfassen, die sich auf eine zeitliche Veränderung der Reaktionskraft beziehen, die durch den Fahrer von dem Grätschsitzfahrzeug (30) empfangen wird.

## Revendications

1. Dispositif d'acquisition d'informations d'entrée de direction (10) configuré pour acquérir les informations relatives à une entrée de direction d'un motocycliste sur un véhicule à selle (30), le dispositif d'acquisition d'informations d'entrée de direction (10) comprenant:
un segment d'acquisition d'informations d'entrée de mouvement (101) configuré pour acquérir les informations qui comportent les informations relatives à une posture du motocycliste, les informations relatives à une force réactive reçue par le motocycliste du véhicule à selle (30) et les informations relatives à l'activité musculaire du motocycliste et qui sont relatives à une entrée de mouvement du motocycliste sur le véhicule à selle (30), l'entrée de mouvement provoquant l'occurrence d'un comportement de véhicule du véhicule à selle (30); et
un segment d'acquisition d'informations d'entrée d'actionnement (102) configurée pour acquérir les informations qui sont relatives à une entrée d'actionnement du motocycliste sur un élément d'actionnement du véhicule à selle (30), l'entrée d'actionnement provoquant l'occurrence du comportement de véhicule, où le dispositif d'acquisition d'informations d'entrée de direction (10) acquiert les informations relatives à l'entrée de direction sur base des informations acquises du segment d'acquisition d'informations d'entrée de mouvement (101) et du segment d'acquisition d'informations d'entrée d'actionnement (102).

2. Dispositif d'acquisition d'informations d'entrée de direction (10) selon la revendication 1,
dans lequel le segment d'acquisition d'informations d'entrée de mouvement (101) comporte
un segment d'acquisition d'informations de posture (1011) configuré pour acquérir les informations relatives à la posture du motocycliste, et
un segment d'acquisition d'informations de force réactive (1012) configuré pour acquérir les informations relatives à la force réactive reçue par le motocycliste du véhicule à selle (30), et
le segment d'acquisition d'informations d'entrée de mouvement (101) est configuré pour acquérir les informations relatives à l'entrée de mouvement sur base des informations acquises du segment d'acquisition d'informations de posture (1011) et du segment d'acquisition d'informations de force réactive (1012).

3. Dispositif d'acquisition d'informations d'entrée de direction (10) selon la revendication 2,
dans lequel le segment d'acquisition d'informations d'entrée de mouvement (101) comporte un segment d'acquisition d'informations d'activité musculaire (1013) configuré pour acquérir les informations relatives à l'activité musculaire du motocycliste.

4. Dispositif d'acquisition d'informations d'entrée de direction (10) selon la revendication 3,
dans lequel le segment d'acquisition d'informations d'activité musculaire (1013) est configuré pour acquérir les informations relatives à l'activité musculaire du motocycliste sur base des informations acquises du segment d'acquisition d'informations de posture (1011) et du segment d'acquisition d'informations de force réactive (1012).

5. Dispositif d'acquisition d'informations d'entrée de direction (10) selon la revendication 3,
dans lequel le segment d'acquisition d'informations d'entrée de mouvement (101) comporte par ailleurs un segment d'acquisition d'informations de véhicule (1014) configuré pour acquérir les informations relatives au comportement de véhicule, et
le segment d'acquisition d'informations d'activité musculaire (1013) est configuré pour acquérir les informations relatives à l'activité musculaire du motocycliste sur base des informations acquises du segment d'acquisition d'informations de posture (1011), du segment d'acquisition d'informations de force réactive (1012) et du segment d'acquisition d'informations de véhicule (1014).

6. Dispositif d'acquisition d'informations d'entrée de direction (10) selon la revendication 5,
dans lequel le segment d'acquisition d'informations de véhicule (1014) est configuré pour acquérir les informations relatives à un changement temporel dans le comportement de véhicule.

7. Dispositif d'acquisition d'informations d'entrée de direction (10) selon l'une quelconque des revendications 3 à 6,
dans lequel le segment d'acquisition d'informations d'activité musculaire (1013) est configuré pour acquérir les informations relatives au changement temporel de l'activité musculaire du motocycliste.

8. Dispositif d'acquisition d'informations d'entrée de direction (10) selon l'une quelconque des revendications 2 à 7,
dans lequel le segment d'acquisition d'informations de posture (1011) est configuré pour acquérir les informations relatives à un changement temporel dans la posture du motocycliste.

9. Dispositif d'acquisition d'informations d'entrée de direction (10) selon l'une quelconque des revendications 2 à 8,
dans lequel le segment d'acquisition d'informations de force réactive (1012) est configuré pour acquérir les informations relatives à un changement temporel de la force réactive reçue par le motocycliste du véhicule à selle (30).
